# EUROPÄISCHE PATENTSCHRIFT

(11) **EP 3 276 231 B1**
(45) Veröffentlichungstag und Bekanntmachung des Hinweises auf die Patenterteilung: **30.09.2020**
(21) Anmeldenummer: 17181628.3
(22) Anmeldetag: 17.07.2017
(51) Int. Cl.: F16K 7/12, B05B 1/30, B05B 1/18, B05B 1/36

(54) **BRAUSESTRAHLERZEUGUNGSVORRICHTUNG**
SPRAY JET GENERATING DEVICE
DISPOSITIF DE PRODUCTION DE JETS

(30) Priorität: 22.07.2016 DE 102016213491
(43) Veröffentlichungstag der Anmeldung: 31.01.2018
(73) Patentinhaber: Hansgrohe SE, 77761 Schiltach (DE)
(72) Erfinder: Butzke, Klaus, 77761 Schiltach (DE); Kalmbach, Marc, 78733 Aichhalden (DE); Kinle, Ulrich, 77773 Schenkenzell (DE)
(74) Vertreter: Patentanwälte Ruff, Wilhelm, Beier, Dauster & Partner mbB

(56) Entgegenhaltungen:
- AT-B- 252 826
- CN-A- 104 971 834
- CN-A- 105 665 162
- CN-U- 202 527 296
- KR-A- 20160 061 459
- US-A- 4 936 508

## Beschreibung

Die Erfindung betrifft eine Brausestrahlerzeugungsvorrichtung nach dem Oberbegriff des Patentanspruchs 1. Derartige Brausestrahlerzeugungsvorrichtungen beinhalten eine Brausestrahlscheibe, die eine Fluidkammer austrittsseitig begrenzt und mindestens eine Strahlaustrittsöffnung aufweist. Der Fluidkammer kann über eine Zuleitung ein Fluid, z.B. Wasser, zugeführt werden, das dann von dort unter Bildung eines Brausestrahls in die eine oder mehreren Strahlaustrittsöffnungen gelangt und aus dieser bzw. diesen austritt. Derartige Vorrichtungen zur Erzeugung eines Brausestrahls werden insbesondere in sanitären Brauseköpfen eingesetzt, wie z.B. Handbrausen, Kopfbrausen und Seitenbrausen von Duscheinrichtungen.

Die Offenlegungsschrift EP 1 700 636 A2 offenbart einen Duschkopf mit einer Brausestrahlerzeugungsvorrichtung, bei der jeder Strahlaustrittsöffnung ein Ventilelement in Form eines gewölbten, mindestens einen Einschnitt aufweisenden Membranabschnittes zugeordnet ist, das elastisch in Schließrichtung vorgespannt und durch anstehenden Wasserdruck in eine Offenstellung bewegbar ist. Damit soll einem unerwünschten Nachtropfen nach Absperren der Wasserzufuhr begegnet werden. Ein weiterer Duschkopf dieser Art ist in der Offenlegungsschrift CN 105 665 162 A offenbart.

In der Patentschrift DE 10 2012 213 518 B3 ist eine Brausestrahlerzeugungsvorrichtung offenbart, die in ihrer Strahlscheibe eine Vielzahl von Strahlaustrittsöffnungen aufweist, die in Gruppen wahlweise für die Brausestrahlerzeugung hinzugeschaltet oder abgeschaltet werden können, wobei jede Gruppe über eine separate Fluidkammer verfügt. Zwischen einer ersten und einer benachbarten zweiten Fluidkammer ist ein Durchgang gebildet, der von einer verformbaren Dichtlippe geschlossen ist und die den Durchgang nach Art eines Rückschlagventils einseitig öffnet, wenn in der ersten Fluidkammer der Fluiddruck größer ist als in der zweiten Fluidkammer. Durch das Betätigen eines Umschalters durch einen Benutzer wird das Fluid in eine bestimmte Fluidkammer eingeleitet und tritt aus den zugehörigen Strahlaustrittsöffnungen aus. Bei Eintritt in die erste Fluidkammer öffnet die Dichtlippe den Durchgang aufgrund des Fluiddrucks, so dass das Fluid zusätzlich in die benachbarte zweite Fluidkammer strömen und auch aus deren zugehörigen Strahlaustrittsöffnungen austreten kann.

Eine bekannte Problematik besteht bei Brausestrahlerzeugungsvorrichtungen darin, dass sich im Betrieb mit kalkhaltigem oder verschmutztem Wasser die Strahlaustrittsöffnungen durch Kalkablagerungen oder Schmutzpartikel partiell oder vollständig zusetzen können und dadurch der Druck in der Fluidkammer unerwünscht zunehmen kann. Dieser Problematik unterliegen besonders auch Brausestrahlerzeugungsvorrichtungen, deren Strahlaustrittsöffnungen einen relativ kleinen Durchmesser besitzen, z.B. zur Erzeugung eines sogenannten Feinnadelstrahls. Ein solcher Druckanstieg kann zu Schädigungen an Bauteilen führen, die diesem erhöhten Druck ausgesetzt sind. Außerdem kann sich dadurch die Brausestrahlcharakteristik in unerwünschter Weise ändern.

Grundsätzlich kann diesem erhöhten Innendruck bis zu einem Reinigungsvorgang der Brausestrahlerzeugungsvorrichtung zwar durch Ankoppeln eines Überdruckventils an die Fluidkammer auf einer der Strahlscheibe entgegengesetzten Seite begegnet werden, allerdings besteht die Gefahr, dass dieses verkehrt herum eingebaut wird oder dass durch das Überdruckventil entweichendes Wasser an unerwünschte Stellen in der Umgebung gelangt, z.B. bei einer Kopfbrause an eine Decke eines Duschraums.

Alternativ sind Brausestrahlerzeugungsvorrichtungen bekannt, bei denen ein oder mehrere Überdruckventile an der Austrittsseite der Brausestrahlscheibe angeordnet sind, wozu die Brausestrahlscheibe zusätzlich zu der oder den Strahlaustrittsöffnungen eine oder mehrere Ventilaufnahmen zur Aufnahme des jeweiligen Überdruckventils aufweist. Derartige Brausestrahlerzeugungsvorrichtungen sind beispielsweise in der Offenlegungsschrift CN 104 971 834 A und der Gebrauchsmusterschrift CN 202 527 296 U offenbart. Die dort verwendeten Überdruckventile definieren jeweils eine Überdrucköffnung und beinhalten einen Ventilschließkörper, der von einer Ventilfeder gegen einen Ventilsitz angedrückt wird und dadurch die Überdrucköffnung geschlossen hält, solange kein Überdruckzustand vorliegt. Wenn in der Fluidkammer im Brausekopf ein Überdruck auftritt, hebt dieser den Ventilschließkörper gegen die Rückstellkraft der Ventilfeder vom Ventilsitz ab, wodurch die Überdrucköffnung freigegeben wird.

Die Patentschrift AT 252826 offenbart eine Brausestrahlerzeugungsvorrichtung der eingangs genannten Art in Form eines Brausekopfs mit einem Brausekopfgehäuse, an dem die Brausestrahlscheibe gehalten ist, wobei am Umfang der Brausestrahlscheibe ein mit dieser einteiliger oder zusätzlich eingebrachter Ring unter Belassung eines Ringspalts zum radial nach außen umgebenden Gehäuse vorgesehen ist, der eine Ringnut aufweist, die an einem Boden die Überdrucköffnungen aufweist. Als Deformationsventilelement dient ein in die Ringnut eingelegter elastischer Dichtungsring, der im Normaldruckzustand die Überdrucköffnungen radial nach innen elastisch anliegend verschließt und sich im Überdruckzustand radial nach außen elastisch aufweitet und die Überdrucköffnungen zum Ringspalt hin freigibt.

Der Erfindung liegt das technische Problem zugrunde, eine Brausestrahlerzeugungsvorrichtung der eingangs genannten Art bereitzustellen, die gegenüber dem oben erläuterten Stand der Technik eine unerwünschte Druckzunahme in der Fluidkammer in günstiger Weise vermeidet.

Die Erfindung löst dieses Problem durch die Bereitstellung einer Brausestrahlerzeugungsvorrichtung mit den Merkmalen des Anspruchs 1. Vorteilhafte sowie bevorzugte Ausgestaltungen der Erfindung sind Gegenstand der weiteren Ansprüche, deren Wortlaut hiermit durch Verweis vollumfänglich in die Beschreibung aufgenommen wird.

Die erfindungsgemäße Brausestrahlerzeugungsvorrichtung, die insbesondere für einen sanitären Brausekopf einsetzbar ist, verfügt über mindestens eine Strahlaustrittsöffnung und mindestens eine Überdrucköffnung in der Brausestrahlscheibe. Sie weist außerdem ein Deformationsventilelement auf, das von einem in der Fluidkammer herrschenden Druck gesteuert zwischen einem Normaldruckzustand und einem Überdruckzustand deformierbar ist, wobei das Deformationsventilelement die Überdrucköffnung im Normaldruckzustand schließt und im Überdruckzustand freigibt.

Der Normaldruckzustand ist hierbei ein Zustand, bei dem der Druck in der Fluidkammer, auch Innendruck der Brause genannt, in einem normalen Bereich für den bestimmungsgemäßen Gebrauch der Brausestrahlerzeugungsvorrichtung liegt. Dieser Innendruck der Brause sollte einen zuvor geeignet festgelegten Grenzdruck nicht übersteigen, z.B. kann der Grenzdruck auf einen Wert von ca. 0,9 bar oder höher festgelegt sein, wie auf ca. 1 bar oder ca. 3 bar oder ca. 5 bar. In diesem Normaldruckzustand tritt das Fluid nur aus der oder den Strahlaustrittsöffnungen und nicht aus der oder den Überdrucköffnungen aus, die vom Deformationsventilelement geschlossen gehalten werden.

Der Überdruckzustand ist ein Zustand, bei dem der Druck in der Fluidkammer höher als im Normaldruckzustand ist, insbesondere wenn der Druck über dem Grenzdruck liegt, der wie gesagt z.B. auf ca. 1 bar oder höher vorab festgelegt wird. Der Überdruckzustand kann speziell dadurch verursacht sein, dass die eine oder mehreren Strahlaustrittsöffnungen verstopft oder jedenfalls in ihrer Öffnungsquerschnittsfläche reduziert sind, insbesondere wegen Kalk- und/oder Schmutzablagerungen an und/oder in der jeweiligen Strahlaustrittsöffnung. Die Festlegung des Grenzdrucks ist so gewählt, dass ein Anstieg des Innendrucks der Brause, der bei verkalkten bzw. verstopften/zugesetzten Strahlaustrittsöffnungen schon bei nur ca. 1 bar Fließdruck des Fluids vor der Brause kritische hohe Werte erreichen kann, noch keine unerwünschten Effekte zur Folge hat, solange der Innendruck den Grenzdruck nicht überschreitet.

Sobald der Überdruckzustand auftritt, gibt das Deformationsventilelement aufgrund seiner vom hohen Fluiddruck in der Fluidkammer verursachten Deformation die zuvor geschlossen gehaltene Überdrucköffnung frei, so dass Fluid aus der Fluidkammer über die Überdrucköffnung abgeführt und der Druck in der Fluidkammer reduziert werden kann. Da sich die Überdrucköffnung in der Strahlscheibe befindet, gelangt das über die Überdrucköffnung abgeleitete Fluid auf der Seite der Strahlscheibe aus einer zugehörigen Brause heraus nach außen, was vorteilhaft ist, weil dort ohnehin ein Fluidaustritt über die Strahlaustrittsöffnung beabsichtigt ist. Es braucht somit im Überdruckzustand nicht mit einem Fluidaustritt an einer anderen Stelle der Brause gerechnet werden. Folglich ermöglicht die Erfindung eine funktionssichere, mit relativ geringem Aufwand realisierbare und hinsichtlich Betriebssicherheit und Funktionalität vorteilhafte Vorrichtung zum Erzeugen eines Brausestrahls.

Die Strahlaustrittsöffnung und die Überdrucköffnung sind vorzugsweise umfangsseitig geschlossene Öffnungen, insbesondere in Form von Bohrungen in der Strahlscheibe mit gleichen oder unterschiedlichen Durchmessern und/oder Geometrien. Die Überdrucköffnung kann wie die Strahlaustrittsöffnung eine in Strahlaustrittsrichtung weisende Öffnung sein. Alternativ kann sie schräg zur Strahlaustrittsrichtung bzw. zu der oder den Strahlaustrittsöffnungen verlaufen. Die Brausestrahlscheibe kann eine beliebige Anzahl von Strahlaustrittsöffnungen und von Überdrucköffnungen aufweisen, wobei in der Regel mehr Strahlaustrittsöffnungen als Überdrucköffnungen vorhanden sind und wobei in vielen Fällen nur eine einzige Überdrucköffnung vorgesehen ist.

Die Brausestrahlscheibe kann einteilig ausgeführt oder aus mehreren Bauteilen zusammengesetzt sein, die aus unterschiedlichen Materialien, insbesondere einem elastischem Material und/oder einem Kunststoff, bestehen können. So kann zum Beispiel eine Gummiplatte bzw. Gummimatte mit Strahlaustrittsnippeln von der Innenseite der Fluidkammer an eine z.B. aus Metall oder Hartkunststoff bestehende Brausestrahlplatte angelegt sein, die mit Löchern für die Strahlaustrittsnippel versehen ist.

Das Deformationsventilelement kann die Überdrucköffnung in entsprechenden Realisierungen der Erfindung am oder vor dem Eintritt der Überdrucköffnung oder innerhalb der Überdrucköffnung schließen, wobei die Überdrucköffnung mit diesem Eintritt aus der Fluidkammer mündet. Das Schließen der Überdrucköffnung kann z.B. durch einen Druckanlagekontakt zwischen dem Deformationsventilelement und der Strahlscheibe und/oder zwischen einem ersten Abschnitt des Deformationsventilelements und einem zweiten Abschnitt des Deformationsventilelements realisiert sein.

Gemäß einem Aspekt der Erfindung sind die Strahlaustrittsöffnung und die Überdrucköffnung von jeweils einem separaten Austrittsnippel der Strahlscheibe gebildet. In einem Beispiel bestehen die separaten Nippel aus einem elastischen Material. Des Weiteren ist es möglich, dass die separaten Nippel an einem flächigen Element, insbesondere einer Gummiplatte, angeformt sind und in zugehörige Öffnungen eines starren flächigen Elements der Strahlscheibe, z.B. einer Lochplatte aus Metall oder Hartkunststoff, eingefügt sind.

Gemäß einem weiteren Aspekt der Erfindung ist das Deformationsventilelement eine deformierbare Dichtmembran, die im Normaldruckzustand die Überdrucköffnung schließend abdeckt. Dabei ist es möglich, die Dichtmembran außerhalb oder innerhalb der Überdrucköffnung anzuordnen. Des Weiteren ist es möglich, dass die Dichtmembran eine Grenzdruckkammer von der Fluidkammer abgrenzt, wobei der Druck in der Grenzdruckkammer die Dichtmembran in ihrer die Überdrucköffnung schließenden Position halten bzw. bestimmen kann, ab welchem Druck in der Fluidkammer die Dichtmembran die Überdrucköffnung freigibt.

Gemäß einem weiteren Aspekt der Erfindung ist das Deformationsventilelement als deformierbares Scheibenelement ausgebildet, das die Fluidkammer auf einer der Brausestrahlscheibe gegenüberliegenden Seite begrenzt, wobei das Scheibenelement auf seiner der Brausestrahlscheibe zugewandten Seite eine Abdichtkontur aufweist, welche die Überdrucköffnung im Normaldruckzustand schließt und im Überdruckzustand freigibt. Die Abdichtkontur kann die Überdrucköffnung im Eintrittsbereich vor ihrem Eintritt und/oder an ihrem Eintritt und/oder in ihrem Inneren schließen. In einer beispielhaften Ausführung kann zusätzlich eine Dichtung so angeordnet sein, dass diese die Abdichtkontur in ihrer Funktion des Schließens der Überdrucköffnung im Normaldruckzustand unterstützt. Eine Möglichkeit hierzu ist, dass ein elastisches Element an der Innenseite der Brausestrahlscheibe angeordnet ist, gegen das die Abdichtkontur im Normalzustand drückt und das auf diese Weise als Dichtung fungiert.

In einer Ausgestaltung der Erfindung sind die Strahlaustrittsöffnung und/oder die Überdrucköffnung von einem elastischen Material, insbesondere einem Elastomer oder Gummi, definiert, d.h. umgeben. Das elastische Material kann in an sich bekannter Weise eine Reinigung der Brausestrahlerzeugungsvorrichtung erleichtern, insbesondere das Entfernen von Kalkablagerungen. Das elastische Material kann beispielsweise ein flächiges Element sein, das zur Strahlscheibe zugehörig ist und gegen ein starres flächiges Element der Strahlscheibe anliegt.

In einer Ausgestaltung der Erfindung ist das Deformationsventilelement einteilig mit der Brausestrahlscheibe bzw. mit einem Bauteil der ggf. mehrteilig ausgeführten Brausestrahlscheibe ausgebildet. Durch die einteilige Bauweise reduziert und vereinfacht sich der Herstellungsaufwand der Brausestrahlerzeugungsvorrichtung.

In einer Ausgestaltung der Erfindung ist das Deformationsventilelement in der Überdrucköffnung angeordnet. Die Integration des Deformationsventilelements in die Überdrucköffnung ermöglicht eine relativ einfache und kompakte Bauweise der Brausestrahlerzeugungsvorrichtung, einhergehend mit einer möglichen Reduktion von benötigten Bauteilen.

In einer Ausgestaltung der Erfindung ist das Deformationsventilelement eine Dichtklappe. Im Überdruckzustand deformiert sich die Dichtklappe, indem sie umklappt, und gibt dadurch die Überdrucköffnung frei. Die Dichtklappe kann z.B. aus mehreren zusammenwirkenden Teildichtklappen bestehen, die im Normaldruckzustand fest und dicht aneinander liegen und im Überdruckzustand auseinanderklappen. Alternativ ist es möglich, dass die Dichtklappe ein einzelnes deformierbares Klappenelement ist, das die Überdrucköffnung im deformierten Überdruckzustand freigibt.

In einer Ausgestaltung der Erfindung ist die Brausestrahlerzeugungsvorrichtung zur Erzeugung eines akustischen Signals im Überdruckzustand eingerichtet. Die Brausestrahlerzeugungsvorrichtung kann z.B. dazu eingerichtet sein, dass das durch die Überdrucköffnung austretende Fluid selbst ein akustisches Signal verursacht und/oder dass das austretende Fluid detektiert wird und infolge der Detektion ein akustisches Signal generiert wird.

Vorteilhafte Ausführungsformen der Erfindung sind in den Zeichnungen dargestellt und werden im Folgenden näher erläutert. Hierbei zeigen:
- Fig. 1: eine ausschnittweise Längsschnittansicht einer Brausestrahlerzeugungsvorrichtung im Normaldruckzustand,
- Fig. 2: die Schnittansicht von Fig. 1 im Überdruckzustand,
- Fig. 3: die Schnittansicht von Fig. 1 für eine Variante der Brausestrahlerzeugungsvorrichtung im Normaldruckzustand,
- Fig. 4: die Schnittansicht von Fig. 3 im Überdruckzustand,
- Fig. 5: die Schnittansicht von Fig. 1 für eine weitere Variante der Brausestrahlerzeugungsvorrichtung im Normaldruckzustand,
- Fig. 6: eine ausschnittweise Draufsicht auf ein Deformationsventilelement der Brausestrahlerzeugungsvorrichtung von Fig. 5 im Normaldruckzustand,
- Fig. 7: die Schnittansicht von Fig. 5 im Überdruckzustand und
- Fig. 8: die ausschnittweise Draufsicht von Fig. 6 im Überdruckzustand.

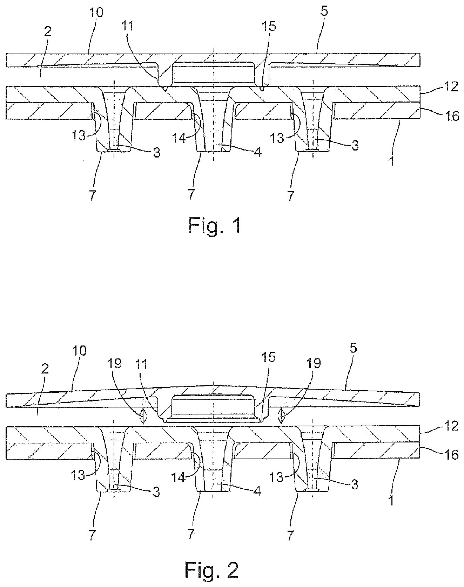

Die in den Fig. 1 und 2 nur ausschnittweise mit ihrem hier interessierenden Teil gezeigte Brausestrahlerzeugungsvorrichtung verfügt über eine Brausestrahlscheibe 1, die eine Fluidkammer 2 austrittsseitig begrenzt. Die gezeigte Brausestrahlscheibe 1 ist zweiteilig mit einer Lochscheibe 16 aus Metall oder Kunststoff und einem flächigen Element 12 aus elastischem Material, insbesondere aus Elastomer oder Gummi, ausgeführt. Dabei liegt das flächige Element 12 an einer der Fluidkammer 2 zugewandten Seite der Lochscheibe 16 gegen diese an, wobei die Lochscheibe 16 aus einem gegenüber dem flächigen Element 12 starreren Material besteht. Alternativ kann die Brausestrahlscheibe 1 einteilig oder aus mehr als zwei Teilen zusammengesetzt sein. Die Brausestrahlerzeugungsvorrichtung kann ein entsprechender Teil einer im Übrigen herkömmlichen Brause sein, insbesondere einer Sanitärbrause, wie einer sanitären Kopf- bzw. Deckenbrause.

Die Brausestrahlscheibe 1 weist mindestens eine Strahlaustrittsöffnung 3 und mindestens eine Überdrucköffnung 4 auf, im gezeigten Beispiel konkret mehrere Strahlaustrittsöffnungen 3 und eine Überdrucköffnung 4.

Das flächige Element 12 verfügt über Austrittsnippel 7, welche in diesem Ausführungsbeispiel die Strahlaustrittsöffnungen 3 und die Überdrucköffnung 4 bereitstellen, d.h. die Strahlaustrittsöffnungen 3 und die Überdrucköffnung 4 sind von jeweils einem Austrittsnippel 7 gebildet. Vorzugsweise bestehen die Austrittsnippel 7 aus dem elastischen Material des flächigen Elements 12, so dass die Strahlaustrittsöffnungen 3 und die Überdrucköffnung 4 von elastischem Material umgeben sind.

Des Weiteren haben die Strahlaustrittsöffnungen 3 in dem gezeigten Beispiel eine geringere Öffnungsquerschnittsfläche als die Überdrucköffnung 4. Somit kann deutlich mehr Fluid aus der Fluidkammer 2 durch die Überdrucköffnung 4 strömen als durch eine einzelne Strahlaustrittsöffnung 3. Die Strahlaustrittsöffnungen 3 weisen eine für die Erzeugung eines gewünschten Brausestrahls entsprechende Form auf. In dem gezeigten Beispiel nimmt hierfür die Öffnungsquerschnittsfläche der Strahlaustrittsöffnungen 3 mit zunehmender Entfernung von der Fluidkammer 2 ab. Kurz vor dem Fluidaustritt aus der Strahlaustrittsöffnung 3 nimmt die Öffnungsquerschnittsfläche sprunghaft zu. Diese sprunghafte Änderung der Öffnungsquerschnittsfläche kann sich vorteilhaft auf die Form des erzeugten Brausestrahls auswirken und das an sich bekannte Ablösen von Kalkablagerungen durch Rubbeln über die Austrittsnippel 7 erleichtern. Die Überdrucköffnung 4 nimmt in ihrer Öffnungsquerschnittsfläche ebenfalls mit zunehmender Entfernung von der Fluidkammer 2 ab.

Die Lochscheibe 16 verfügt über Öffnungen bzw. Bohrungen 13 für die Strahlaustrittsöffnungen 3 und über eine Öffnung bzw. Bohrung 14 für die Überdrucköffnung 4, wobei die Austrittsnippel 7 durch die Öffnungen bzw. Bohrungen 13, 14 hindurchgeführt sind und von der Lochscheibe 16 mit ihrer fluidaustrittsseitigen Öffnung vorstehen.

Des Weiteren verfügt die Brausestrahlerzeugungsvorrichtung über ein Deformationsventilelement 5, das vom in der Fluidkammer 2 herrschenden Druck gesteuert zwischen einem Normaldruckzustand und einem Überdruckzustand deformierbar ist, wobei es die mindestens eine Überdrucköffnung 4 im Normaldruckzustand schließt und im Überdruckzustand freigibt. Im Beispiel der Fig. 1 und 2 ist das Deformationsventilelement 5 als elastisch deformierbares Scheibenelement 10 ausgebildet, das die Fluidkammer 2 auf einer der Brausestrahlscheibe 1 gegenüberliegenden Seite begrenzt und dazu vorzugsweise einen ähnlich großen Durchmesser bzw. eine ähnlich große Flächenausdehnung aufweist wie die Strahlscheibe 1.

Das Scheibenelement 10 schließt im Normaldruckzustand, der in Fig. 1 gezeigt ist, die Überdrucköffnung 4 mit einer Abdichtkontur 11, die in diesem Beispiel als Dichtringkontur realisiert ist, welche die Überdrucköffnung 4 ringförmig geschlossen umgibt und dazu vor ihr bzw. in einem Bereich außerhalb von ihr angeordnet ist, so dass sie im Normaldruckzustand gegen die Brausestrahlscheibe 1 und hier speziell gegen das flächige Element 12 aus elastischem Material anliegt. Um die Dichtigkeit im Normaldruckzustand zu erhöhen, verfügt die Abdichtkontur 11 an ihrem freien Stirnende über einen Abschlussring 15, der sich im Normaldruckzustand in das elastische Material des flächigen Elements 12 abdichtend eindrückt, wozu das Scheibenelement 10 im Normaldruckzustand entsprechend vorgespannt gehalten ist.

Die Wandstärke des Scheibenelements 10 nimmt im gezeigten Beispiel bei Annäherung an die Abdichtkontur 11 ab. Durch entsprechende Wahl der Wandstärke und/oder deren Dickenverlauf in Kombination mit der Materialwahl des Scheibenelements 10 kann ein Grenzdruck der Fluidkammer 2 vorgegeben werden, ab dem der Überdruckzustand vorliegt und das Scheibenelement 10 die Überdrucköffnung 4 freigibt, z.B. kann ein Grenzdruck von ca. 1 bar oder ca. 3 bar oder ca. 5 bar vorgegeben werden. Bei Bedarf können mehrere solche Scheibenelemente 10 bereitgestellt werden, die auf unterschiedliche Grenzdruckwerte ausgelegt sind, und aus denen ein für eine jeweilige Brause geeignetes Scheibenelement 10 ausgewählt werden kann.

Folglich ist der Überdruckzustand ein Zustand, in dem ein vorgegebener Grenzdruck durch den Fluiddruck in der Fluidkammer 2 überschritten wird. Dieser Zustand wird insbesondere dann erreicht, wenn die Strahlaustrittsöffnungen 3 teilweise oder vollständig verstopfen, insbesondere durch Schmutzwasser und/oder Kalkablagerungen, so dass nicht mehr so viel Fluid aus der Fluidkammer 2 austreten kann und sich der Druck in der Fluidkammer 2 erhöht. Beispielsweise kann sich ein solcher Druck im Bereich von ca. 1 bar bis ca. 5 bar ergeben, wenn ca. 40% bis 80% der Strahlaustrittsöffnungen 3 verstopft sind. Alternativ kann der Überdruckzustand auch dann auftreten, wenn das Fluid mit einem zu hohen Druck in die Fluidkammer 2 eingeleitet wird.

Bei Überschreiten des Grenzdrucks in der Fluidkammer 2 wölbt sich das Scheibenelement 10 nach außen, d.h. in Richtung von der Brausestrahlscheibe 1 weg, wodurch sich die Abdichtkontur 11 vom flächigen Element 12 abhebt. Dieser Überdruckzustand ist in Fig. 2 illustriert, wobei der auf das Scheibenelement 10 und auf das flächige Element 12 wirkende Fluiddruck durch einen Doppelpfeil 19 illustriert ist. Das Scheibenelement 10 ist derart nach außen gewölbt, dass der Abschlussring 15 keinen Kontakt mehr zum flächigen Element 12 hat. Folglich ist die Überdrucköffnung 4 freigegeben und das Fluid kann die Fluidkammer 2 durch die Überdrucköffnung 4 hindurch verlassen.

In einer üblichen und daher hier nicht näher gezeigten Weise ist das Scheibenelement 10 randseitig fest an einem entsprechenden Abschnitt eines Brausegehäuses gehalten, z.B. durch eine Klemm-, Klebe-, Clips- oder Schraubverbindung. Aufgrund dieser randseitigen Fixierung wölbt sich das Scheibenelement 10 überwiegend im mittleren Bereich, wo sich die Abdichtkontur 11 befindet, d.h. es deformiert sich dort nach außen im Wesentlichen in einer zur Strahlscheibenebene senkrechten Richtung.

Mit dem Austritt von Fluid aus der Fluidkammer 2 durch die Überdrucköffnung 4 hindurch wird der Druck in der Fluidkammer 2 reduziert, und durch den aus der Überdrucköffnung 4 austretenden Fluidstrahl wird dem Benutzer der Überdruckzustand und somit die Notwendigkeit eines Reinigungsvorgangs für die Strahlaustrittsöffnungen 3 optisch und haptisch signalisiert.

Wenn der Fluiddruck in der Fluidkammer 2 wieder nachlässt und unter den Grenzdruck sinkt, kehrt das Scheibenelement 10 aufgrund seiner Eigenelastizität bzw. Vorspannung wieder in seinen Normaldruckzustand von Fig. 1 zurück und dichtet die Überdrucköffnung 4 wieder gegenüber der Fluidkammer 2 ab. Ebenso verbleibt natürlich das Scheibenelement nach einem jeweiligen Reinigungsvorgang der Brausestrahlerzeugungsvorrichtung im Normaldruckzustand, bis der Überdruckzustand erneut auftritt.

Da die Überdrucköffnung 4 nur im gegenüber dem Normalbetrieb der Brause viel selteneren Überdruckzustand von Fluid durchströmt wird und zudem vorzugsweise einen größeren Durchflussquerschnitt als die Strahlaustrittsöffnungen 3 besitzt, unterliegt sie keiner signifikanten Gefahr des Verstopfens durch Kalkablagerungen und/oder Schmutzpartikel, so dass dieser Überdruckschutz entsprechend ausfallsicher ist.

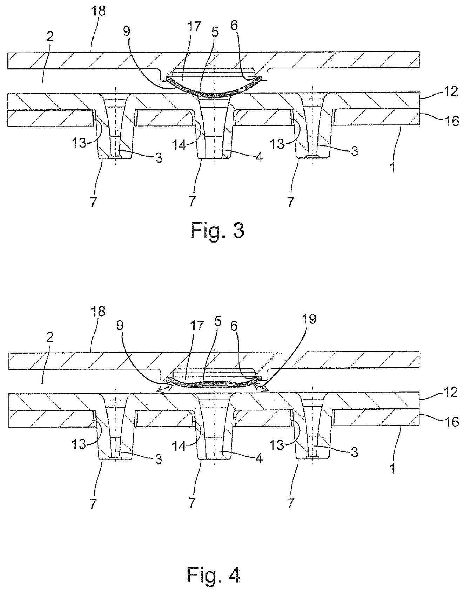

Die Fig. 3 und 4 zeigen eine Variante der Brausestrahlerzeugungsvorrichtung der Fig. 1 und 2, wobei zum besseren Verständnis für identische und funktionell äquivalente Elemente gleiche Bezugszeichen verwendet sind und insoweit auch auf die obigen Ausführungen zum Ausführungsbeispiel der Fig. 1 und 2 verwiesen werden kann, so dass nachstehend im Wesentlichen nur auf die bestehenden Unterschiede eingegangen wird. Bei dieser Variante ist das Deformationsventilelement 5 in Form einer deformierbaren Dichtmembran 9 ausgebildet. Die Dichtmembran 9 verschließt die Überdrucköffnung 4 im Normaldruckzustand durch vorgespanntes elastisches Anliegen gegen deren Eintritt, wie in Fig. 3 gezeigt, und damit auf Höhe ihres Eintritts. Dabei wölbt sich die Dichtmembran 9 in diesem Ausführungsbeispiel kugelschalenförmig zum Eintritt der Überdrucköffnung 4 vor.

Die Fluidkammer 2 ist in dieser Ausführungsvariante auf ihrer der Brausestrahlscheibe 1 gegenüberliegenden Seite durch ein starres Plattenelement 18 begrenzt, das auf seiner der Fluidkammer 2 zugewandten Seite eine Aufnahme 6 für die Dichtmembran 9 aufweist und die Dichtmembran 9 derart in der Aufnahme 6 hält, dass eine von der Fluidkammer 2 getrennte Grenzdruckkammer 17 zwischen der Dichtmembran 9 und dem Plattenelement 18 gebildet ist. In der Grenzdruckkammer 17 herrscht ein vorgegebener Kammerdruck. Abhängig von dem Kammerdruck und von der Steifigkeit der Dichtmembran 9 deformiert sich die Dichtmembran 9 durch den in der Fluidkammer 2 im Überdruckzustand herrschenden Druck 19, der in diesem Fall auf die Dichtmembran 9 einwirkt. Der Druck 19 drückt hierbei die Dichtmembran 9 von der Überdrucköffnung 4 weg, in den Fig. 3 und 4 nach oben, so dass die Dichtmembran 9 sich von der Überdrucköffnung 4 abhebt und diese freigibt, wie in Fig. 4 gezeigt. Somit kann das Fluid wiederum die Fluidkammer 2 durch die von der Dichtmembran 9 freigegebene Überdrucköffnung 4 verlassen, und der Überdruckzustand kann dem Benutzer signalisiert und gleichzeitig abgebaut werden.

Auch hier lassen sich bei Bedarf wiederum mehrere auf unterschiedliche Grenz- bzw. Ansprechdrücke ausgelegte Dichtmembranen 9 oder mit der jeweiligen Dichtmembran bestückte Plattenelemente 18 zur wahlweisen Verwendung in entsprechenden Brausen bereitstellen.

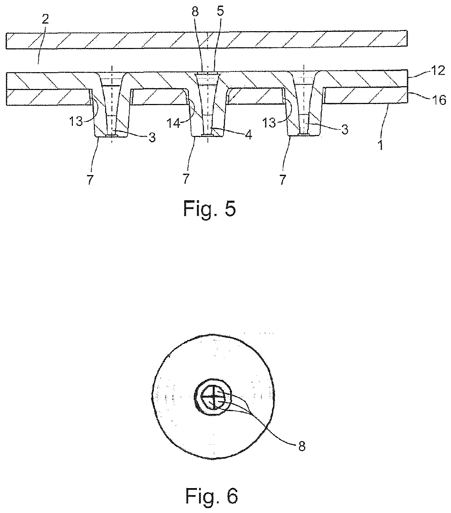

Die Fig. 5 bis 8 zeigen eine weitere Variante der Brausestrahlerzeugungsvorrichtung der Fig. 1 und 2, wobei wiederum zum leichteren Verständnis für identische oder funktionell äquivalente Elemente entsprechende Bezugszeichen verwendet sind und diesbezüglich auch auf die obigen Erläuterungen des Ausführungsbeispiels von Fig. 1 und 2 verwiesen werden kann. Das Deformationsventilelement 5 ist bei dieser Variante in Form von mehreren, z.B. wie gezeigt vier, deformierbaren Dichtklappen 8 ausgebildet, wie insbesondere aus Fig. 6 ersichtlich. Diese Dichtklappen 8 sind in diesem Beispiel einteilig mit bzw. an dem zur Brausestrahlscheibe 1 zugehörigen flächigen Element 12 ausgeführt und sind innerhalb der Überdrucköffnung 4 angeordnet, hier speziell im Bereich ihres Eintritts.

Im Normaldruckzustand gemäß den Fig. 5 und 6 liegen die Dichtklappen 8 dicht aneinander und schließen die Überdrucköffnung 4, so dass das Fluid die Fluidkammer 2 nicht durch die Überdrucköffnung 4, sondern nur durch die Strahlaustrittsöffnungen 3 hindurch verlassen kann.

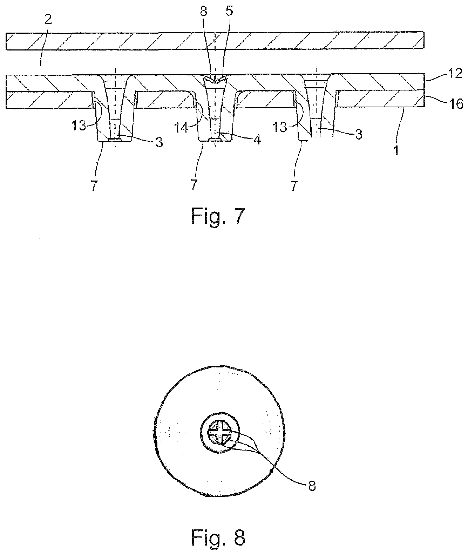

Im Überdruckzustand gemäß den Fig. 7 und 8 sind die vier deformierbaren Dichtklappen 8 infolge des erhöhten Druckes in der Fluidkammer 2 auseinandergeklappt, wobei sich die Dichtklappen 8 in die Überdrucköffnung 4 hinein umbiegen. Durch das Umklappen bzw. Umbiegen der vier deformierbaren Dichtklappen 8 liegen diese nicht mehr aneinander an und geben folglich die Überdrucköffnung 4 frei, so dass Fluid die Fluidkammer 2 durch die Überdrucköffnung 4 hindurch verlassen kann. Aus Fig. 8 ist ersichtlich, wie die umgebogenen Dichtklappen 8 einen kreuzförmigen Durchtritt für das in die Überdrucköffnung 4 strömende Fluid bilden.

In einer nicht weiter dargestellten Variante der erfindungsgemäßen Brausestrahlerzeugungsvorrichtung ist diese dazu eingerichtet, ein akustisches Signal zu erzeugen, sobald der Überdruckzustand eintritt und das Fluid die Fluidkammer durch die Überdrucköffnung verlässt. Das akustische Signal kann durch das Austreten des Fluid aus der Überdrucköffnung selbst erzeugt werden, oder es wird in einer herkömmlichen Weise der Fluidaustritt sensorisch erfasst und daraufhin ein akustischer Signalgeber aktiviert.

In einer weiteren Variante der erfindungsgemäßen Brausestrahlerzeugungsvorrichtung verfügt diese über eine außermittig angeordnete Überdrucköffnung oder über mehrere Überdrucköffnungen, die z.B. in einem Mittenbereich oder über die gesamte Strahlscheibenfläche hinweg verteilt angeordnet sind.

Weiter ist es möglich, die Anzahl und/oder Anordnung der Strahlaustrittsöffnungen der erfindungsgemäßen Brausestrahlerzeugungsvorrichtung abweichend von den gezeigten Beispielen zu variieren. So kann die Brausestrahlerzeugungsvorrichtung in entsprechenden Ausführungen über nur eine Strahlaustrittsöffnung verfügen, um einen sogenannten Schwallstrahl zu erzeugen. Alternativ kann die Brausestrahlerzeugungsvorrichtung über eine Vielzahl von Strahlaustrittsöffnung verfügen, die im Mittenbereich oder außermittig oder über die gesamte Strahlscheibenfläche hinweg gleichmäßig verteilt oder in Gruppen angeordnet sind, einschließlich Ausführungsformen, bei denen mit den Strahlaustrittsöffnungen verschiedene übliche Brausestrahlarten erzeugt werden können, wie ein Softstrahl und ein Massagestrahl.

In weiteren Varianten der erfindungsgemäßen Brausestrahlerzeugungsvorrichtung kann das Deformationsventilelement irgendeine Kombination aus den gezeigten Varianten der Fig. 1 bis 8 sein. So kann es beispielsweise über eine Dichtmembran und zusätzlich über eine Dichtklappe für eine gemeinsame Überdrucköffnung oder für je eine von mehreren Überdrucköffnungen verfügen.

Wie die gezeigten und oben erläuterten Ausführungsbeispiele deutlich machen, stellt die Erfindung eine Brausestrahlerzeugungsvorrichtung mit einfachem und betriebssicherem Überdruckschutz zur Verfügung. Die Erfindung ist insbesondere in der Sanitärtechnik einsetzbar, aber auch in anderen Anwendungen, in denen der Bedarf besteht, einen Brausestrahl mit Überdruckschutz erzeugen zu können.

## Patentansprüche

1. Brausestrahlerzeugungsvorrichtung, insbesondere für einen sanitären Brausekopf, mit
- einer Brausestrahlscheibe (1), die eine Fluidkammer (2) austrittsseitig begrenzt und mindestens eine Strahlaustrittsöffnung (3) und mindestens eine Überdrucköffnung (4) aufweist, und
- einem Deformationsventilelement (5), das von einem in der Fluidkammer herrschenden Druck gesteuert zwischen einem Normaldruckzustand, wenn der Druck unter einem vorgebbaren Grenzdruck liegt, und einem Überdruckzustand, wenn der Druck über dem Grenzdruck liegt, deformierbar ist, wobei das Deformationsventilelement die Überdrucköffnung im Normaldruckzustand schließt und im Überdruckzustand freigibt,
**dadurch gekennzeichnet, dass**
- die Strahlaustrittsöffnung und die Überdrucköffnung von jeweils einem Austrittsnippel (7) der Strahlscheibe gebildet sind, und/oder
- das Deformationsventilelement als deformierbare Dichtmembran (9), die sich im Normaldruckzustand gegen die Überdrucköffnung verschließend elastisch anlegt und sich im Überdruckzustand von der Überdrucköffnung in Richtung von der Brausestrahlscheibe weg axial abhebt, oder als deformierbares Scheibenelement (10) ausgebildet ist, das die Fluidkammer auf einer der Brausestrahlscheibe gegenüberliegenden Seite begrenzt, wobei das Scheibenelement auf seiner der Brausestrahlscheibe zugewandten Seite eine Abdichtkontur (11) aufweist, welche die Überdrucköffnung im Normaldruckzustand schließt und im Überdruckzustand freigibt.

2. Brausestrahlerzeugungsvorrichtung nach Anspruch 1, **dadurch gekennzeichnet, dass** die Strahlaustrittsöffnung und/oder die Überdrucköffnung von einem elastischen Material umgeben sind.

3. Brausestrahlerzeugungsvorrichtung nach einem der vorhergehenden Ansprüche, **dadurch gekennzeichnet, dass** das Deformationsventilelement mit der Brausestrahlscheibe einteilig ausgeführt ist.

4. Brausestrahlerzeugungsvorrichtung nach einem der vorhergehenden Ansprüche, **dadurch gekennzeichnet, dass** das Deformationsventilelement in der Überdrucköffnung angeordnet ist.

5. Brausestrahlerzeugungsvorrichtung nach einem der vorhergehenden Ansprüche, **dadurch gekennzeichnet, dass** das Deformationsventilelement eine Dichtklappe (8) ist.

6. Brausestrahlerzeugungsvorrichtung nach einem der vorhergehenden Ansprüche, **dadurch gekennzeichnet, dass** sie einen Überdrucköffnungsfluidaustritt oder einen akustischen Signalgeber zur Erzeugung eines akustischen Signals im Überdruckzustand aufweist.

## Claims

1. Shower jet generating device, preferably for a sanitary shower head, comprising
- a shower jet disk (1) delimiting a fluid chamber (2) on the outlet side and including at least one jet outlet opening (3) and at least one overpressure vent (4), and
- a deformation valve element (5) which, controlled by a pressure present within the fluid chamber, is deformable between a normal pressure condition, where the pressure is below a predeterminable limit pressure, and an overpressure condition, where the pressure is above the limit pressure, wherein the deformation valve element closes the overpressure vent in the normal pressure condition and opens it in the overpressure condition,
**characterized in that**
- the jet outlet opening and the overpressure vent are each constituted by an outlet nipple (7) of the jet disk, and/or
- the deformation valve element is a deformable seal membrane (9) which, in the normal pressure condition, rests elastically against the overpressure vent in a sealing manner and, in the overpressure condition, lifts off from the overpressure vent axially in a direction away from the shower jet disk, or is a deformable disk element (10) delimiting the fluid chamber on a side opposite the shower jet disk, wherein the disk element has a sealing contour (11) on its side facing the shower jet disk, which contour closes the overpressure vent in the normal pressure condition and opens it in the overpressure condition.

2. Shower jet generating device according to claim 1, **characterized in that** the jet outlet opening and/or the overpressure vent are surrounded by an elastic material.

3. Shower jet generating device according to any of the preceding claims, **characterized in that** the deformation valve element is implemented in one piece with the shower jet disk.

4. Shower jet generating device according to any of the preceding claims, **characterized in that** the deformation valve element is disposed within the overpressure vent.

5. Shower jet generating device according to any of the preceding claims, **characterized in that** the deformation valve element is a seal flap (8).

6. Shower jet generating device according to any of the preceding claims, **characterized in that** it has an overpressure vent fluid outlet or an acoustic signal transducer for generating an acoustic signal in the overpressure condition.

## Revendications

1. Dispositif de génération de jet de douche, en particulier pour une pomme de douche sanitaire, comportant
- un disque à jet de douche (1) qui délimite une chambre à fluide (2) du côté sortie et qui présente au moins une ouverture de sortie de jet (3) et au moins une ouverture de surpression (4), et
- un élément de vanne de déformation (5) qui, en étant commandée par une pression régnant dans la chambre à fluide, est déformable entre un état de pression normale lorsque la pression est inférieure à une pression limite prédéterminée, et un état de surpression lorsque la pression est supérieure à la pression limite, l'élément de vanne de déformation refermant l'ouverture de surpression dans l'état de pression normale et la libérant dans l'état de surpression,
**caractérisé en ce que**
- l'ouverture de sortie de jet et l'ouverture de surpression sont formées chacune par un embout de sortie (7) du disque à jet, et/ou
- l'élément de vanne de déformation est réalisé sous la forme d'une membrane d'étanchéité déformable (9) qui, dans l'état de pression normale, s'appuie élastiquement contre l'ouverture de surpression en la refermant, et qui, dans l'état de surpression, se soulève de l'ouverture de surpression axialement en éloignement du disque à jet de douche, ou bien sous la forme d'un élément en disque (10) déformable qui délimite la chambre à fluide sur un côté opposé au disque à jet de douche, l'élément en disque présentant sur son côté tourné vers le disque à jet de douche un contour d'étanchéité (11) qui referme l'ouverture de surpression dans l'état de pression normale et qui la libère dans l'état de surpression.

2. Dispositif de génération de jet de douche selon la revendication 1, **caractérisé en ce que** l'ouverture de sortie de jet et/ou l'ouverture de surpression sont entourées d'un matériau élastique.

3. Dispositif de génération de jet de douche selon l'une des revendications précédentes, **caractérisé en ce que** l'élément de vanne de déformation est réalisé d'un seul tenant avec le disque à jet de douche.

4. Dispositif de génération de jet de douche selon l'une des revendications précédentes, **caractérisé en ce que** l'élément de vanne de déformation est disposé dans l'ouverture de surpression.

5. Dispositif de génération de jet de douche selon l'une des revendications précédentes, **caractérisé en ce que** l'élément de vanne de déformation est un clapet d'étanchéité (8).

6. Dispositif de génération de jet de douche selon l'une des revendications précédentes, **caractérisé en ce qu'**il comprend une sortie de fluide d'ouverture de surpression ou un générateur de signal acoustique pour générer un signal acoustique à l'état de surpression.
